# EUROPEAN PATENT SPECIFICATION

(11) **EP 4 443 337 B1**
(45) Date of publication and mention of the grant of the patent: **04.03.2026**
(21) Application number: 23819966.5
(22) Date of filing: 31.03.2023
(51) Int. Cl.: G06N 3/044, G06N 3/0455, G06N 3/0464, G06N 3/047, G06N 3/0475, G06N 3/084, G06N 3/094, G10L 15/16, G10L 25/30

(54) **ELECTRONIC DEVICE AND CONTROL METHOD THEREOF**
ELEKTRONISCHE VORRICHTUNG UND STEUERUNGSVERFAHREN DAFÜR
DISPOSITIF ÉLECTRONIQUE ET SON PROCÉDÉ DE COMMANDE

(30) Priority: 09.06.2022 KR 20220070278
(43) Date of publication of application: 09.10.2024
(73) Proprietor: Samsung Electronics Co., Ltd, Suwon-si, Gyeonggi-do 16677 (KR)
(72) Inventor: ARENDT, Krzysztof, 00-844 Warszawa (PL); STEFANSKI, Grzegorz, 00-844 Warszawa (PL); MASZTALSKI, Piotr, 00-844 Warszawa (PL); SZUMACZUK, Artur, 00-844 Warszawa (PL); TKACZUK, Jakub, 00-844 Warszawa (PL); MATUSZEWSKI, Mateusz, 00-844 Warszawa (PL); SWIATEK, Michal, 00-844 Warszawa (PL); OLENIECKI, Tymoteusz, 00-844 Warszawa (PL)
(74) Representative: Arnold & Siedsma
(86) International application number: PCT/KR2023/004331
(87) International publication number: WO 2023/239028

(56) References cited:
- KR-A- 20200 002 147
- KR-B1- 102 238 855
- US-A1- 2020 272 944
- ANURAGANAND SHARMA ET AL: "SMOTified-GAN for class imbalanced pattern classification problems", ARXIV.ORG, CORNELL UNIVERSITY LIBRARY, 201 OLIN LIBRARY CORNELL UNIVERSITY ITHACA, NY 14853, 27 March 2022 (2022-03-27), XP091170760, DOI: 10.1109/ACCESS.2022.3158977
- SUZUKI MUNEAKI ET AL: "Understanding the Reason for Misclassification by Generating Counterfactual Images", 2021 17TH INTERNATIONAL CONFERENCE ON MACHINE VISION AND APPLICATIONS (MVA), MVA ORGANIZATION, 25 July 2021 (2021-07-25), pages 1 - 5, XP033961423, DOI: 10.23919/MVA51890.2021.9511352
- YOUNG-WOO LEE, MIN-JU SONG, HEUNG-SEOK CHAE : " Accuracy Evaluation Method for Image Classification Deep Learning Model considering Potentially Misclassified Data.", JOURNAL OF KOREAN INSTITUTE OF INFORMATION SCIENTISTS AND ENGINEERS, KOREAN INSTITUTE OF INFORMATION SCIENTISTS AND ENGINEERS, vol. 48, no. 6, 1 June 2021 (2021-06-01), pages 657 - 667, XP009550984, ISSN: 2383-6296
- HENDRYCKS DAN, GIMPEL KEVIN: "A baseline for detecting misclassified and out-of-distribution examples in neural networks", ARXIV.ORG, 3 October 2018 (2018-10-03), Ithaca, XP093115033, DOI: 10.48550/arXiv.1610.02136
- ZHANG HUI; DING HENGHUI: "Prototypical Matching and Open Set Rejection for Zero-Shot Semantic Segmentation", 2021 IEEE/CVF INTERNATIONAL CONFERENCE ON COMPUTER VISION (ICCV), IEEE, 10 October 2021 (2021-10-10), pages 6954 - 6963, XP034092323, DOI: 10.1109/ICCV48922.2021.00689

## Description

### [Technical Field]

The disclosure relates to an electronic apparatus and a control method thereof. More particularly, the disclosure relates to an electronic apparatus and a control method thereof capable of training an artificial intelligence model by acquiring new training data based on existing training data.

### [Background Art]

An artificial intelligence (AI) system is a system in which a machine, by itself, derives an intended result or performs an intended operation by performing training and making a determination.

AI technology includes machine learning such as deep learning, and element technologies using machine learning. The AI technology is used in a wide range of technical fields such as linguistic understanding, visual understanding, inference/prediction, knowledge representation, and motion control.

For example, the AI technology may be used in the technical fields of visual understanding and inference/prediction. Specifically, the AI technology may be used to implement a technology for analyzing and classifying input data. That is, it is possible to implement a method and an apparatus capable of acquiring an intended result by analyzing and/or classifying input data.

Here, when an AI model generates output data corresponding to input data, a degree of accuracy of the output data may vary depending on training data.

At this time, there is a problem in that it takes a lot of time and resources to secure a large number of training data and improve the performance of the AI model.

Document US 2020/272944 Al discloses a machine-learning framework in which a trained neural network identifies misclassified samples and augments the training set with synthetic data derived from those errors.

### [Disclosure]

### [Technical Problem]

Aspects of the disclosure are to address at least the above-mentioned problems and/or disadvantages and to provide at least the advantages described below. The invention is defined by the appended independent claims. Further embodiments are defined by the appended dependent claims.

### [Technical Solution]

### [Description of Drawings]

The above and other aspects, features, and advantages of certain embodiments of the disclosure will be more apparent from the following description taken in conjunction with the accompanying drawings, in which:
FIG. 1 is a block diagram for explaining a configuration of an electronic apparatus according to an embodiment of the disclosure;
FIG. 2 is a diagram for explaining an artificial intelligence model according to an embodiment of the disclosure;
FIG. 3 is a flowchart for explaining a method of acquiring an embedding vector according to an embodiment of the disclosure;
FIG. 4 is a diagram for explaining an embedding space according to an embodiment of the disclosure;
FIG. 5 is a flowchart for explaining a method of acquiring a synthetic embedding vector according to an embodiment of the disclosure;
FIGS. 6A, 6B, 6C, 6D, and 6E are diagrams for explaining a method of acquiring a synthetic embedding vector according to various embodiments of the disclosure;
FIG. 7 is a flowchart for explaining a method of re-training an artificial intelligence model according to an embodiment of the disclosure;
FIG. 8 is a block diagram for explaining configurations of an electronic apparatus and an external device according to an embodiment of the disclosure;
FIG. 9 is a sequence diagram for explaining operations of an electronic apparatus, an external device, and a server according to an embodiment of the disclosure;
FIGS. 10A and 10B are diagrams for explaining the performance of an artificial intelligence model according to various embodiments of the disclosure;
FIG. 11 is a flowchart for explaining a control method of an electronic apparatus according to an embodiment of the disclosure;
FIG. 12 is a flow chart for explaining a method of acquiring a synthesized sample using a generative adversarial network (GAN) according to an embodiment of the disclosure; and
FIG. 13 is a flow chart for explaining a method of acquiring a synthesized sample using a variational auto encoder (VAE) and a variational auto decoder (VAD) according to an embodiment of the disclosure.

The same reference numerals are used to represent the same elements throughout the drawings.

### [Mode for Invention]

The following description with reference to the accompanying drawings is provided to assist in a comprehensive understanding of various embodiments of the disclosure as defined by the claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure.

It is to be understood that the singular forms "a," "an," and "the" include plural referents unless the context clearly indicates otherwise. Thus, for example, reference to "a component surface" includes reference to one or more of such surfaces. Singular forms include plural forms unless the context clearly indicates otherwise.

The expression "have", "may have", "include", "may include", or the like used herein indicates the presence of stated features (e.g., components such as numerical values, functions, operations, or parts) and does not preclude the presence of additional features.

The expression "A or B", "at least one of A and/or B", "one or more of A and/or B", or the like used herein may include all possible combinations of items enumerated therewith. For example, "A or B", "at least one of A and B", or "at least one of A or B" may mean (1) including at least one A, (2) including at least one B, or (3) including both at least one A and at least one B.

The expressions "first", "second," and the like used herein may modify various components regardless of order and/or importance, and may be used to distinguish one component from another component, and do not limit the components.

It should further be understood that when a component (e.g., a first component) is referred to as being "(operatively or communicatively) coupled with/to" or "connected to" another component (e.g., a second component), this denotes that a component is coupled with/to or connected to another component directly or via an intervening component (e.g., a third component).

On the other hand, it should be understood that when a component (e.g., a first component) is referred to as being "directly coupled with/to" or "directly connected to" another component (e.g., a second component), this denotes that there is no intervening component (e.g., a third component) between a component and another component.

The expression "configured to (or set to)" used herein may be used interchangeably with the expression "suitable for," "having the capacity to," "designed to," "adapted to," "made to," or "capable of" according to a context. The term "configured to (set to)" does not necessarily mean "specifically designed to" in hardware.

Instead, the expression "a device configured to ..." may mean that the device is "capable of ... " along with other devices or parts in a certain context. For example, the phrase "a processor configured to (set to) perform A, B, and C" may mean a dedicated processor (e.g., an embedded processor) for performing the corresponding operations, or a generic-purpose processor (e.g., a central processing unit (CPU) or an application processor (AP)) capable of performing the corresponding operations by executing one or more software programs stored in a memory device.

In an embodiment, a "module" or a "unit" performs at least one function or operation, and may be implemented as hardware, software, or combination thereof. In addition, a plurality of "modules" or a plurality of "units" may be integrated into at least one module and may be implemented as at least one processor except for "modules" or "units" that need to be implemented in specific hardware.

Meanwhile, various elements and regions in the drawings are schematically illustrated.

Hereinafter, embodiments according to the disclosure will be described in detail with reference to the accompanying drawings so that the embodiments can be easily carried out by those having ordinary knowledge in the art to which the disclosure pertains.

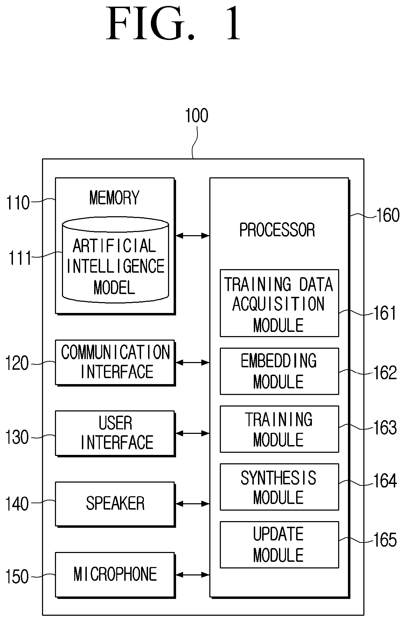

FIG. 1 is a block diagram for explaining the configuration of an electronic apparatus according to an embodiment of the disclosure.

Referring to FIG. 1, an electronic apparatus 100 may include a memory 110, a communication interface 120, a user interface 130, a speaker 140, a microphone 150, and a processor 160. Some of the above-described components may be omitted from the electronic apparatus 100, and other components may further be included in the electronic apparatus 100.

In addition, the electronic apparatus 100 may be implemented as an audio device such as an earphone or a headset, but this is merely an example, and the electronic apparatus 100 may be implemented in various forms such as a smartphone, a tablet personal computer (PC), a PC, a server, a smart TV, a mobile phone, a personal digital assistant (PDA), a laptop, a media player, an e-book reader, a digital broadcasting terminal, a navigation device, a kiosk, an MP3 player, a digital camera, a wearable device, a home appliance, and other mobile or non-mobile computing devices.

The memory 110 may store at least one instruction related to the electronic apparatus 100. The memory 110 may store an operating system (O/S) for driving the electronic apparatus 100. Also, the memory 110 may store various software programs or applications for the electronic apparatus 100 to operate according to various embodiments of the disclosure. In addition, the memory 110 may include a semiconductor memory such as a flash memory or a magnetic storage medium such as a hard disk.

Specifically, the memory 110 may store various software modules for the electronic apparatus 100 to operate according to various embodiments of the disclosure, and the processor 160 may execute the various software modules stored in the memory 110 to control an operation of the electronic apparatus 100. That is, the memory 110 may be accessed by the processor 160, and data can be read/written/modified/deleted/updated by the processor 160.

Meanwhile, the term "memory 110" herein may be used as a meaning including a memory 110, a read-only memory (ROM) (not shown), a random-access memory (RAM) (not shown) in the processor 160, or a memory card (not shown) (e.g., a micro secure digital (SD) card or a memory stick) mounted in the electronic apparatus 100.

In addition, the memory 110 may store at least one artificial intelligence model 111. In this case, the artificial intelligence model 111 may be a trained model that classifies input data when the data is input.

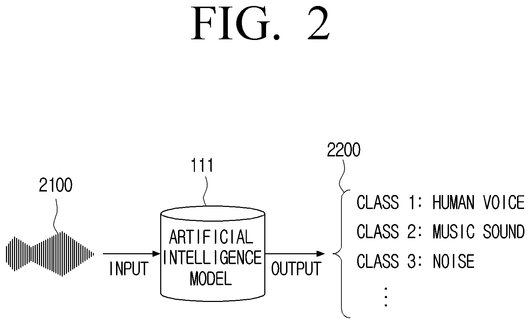

FIG. 2 is a diagram for explaining an artificial intelligence model according to an embodiment of the disclosure.

Referring to FIG. 2, the artificial intelligence model 111 outputs one class among a plurality of classes 2200 when audio data 2100 is input. The output class includes at least a human voice in class 1, a music sound in class 2, and a noise in class 3. Alternatively, the plurality of classes may include a voice of a specific person.

Meanwhile, the artificial intelligence model 111 may include at least one artificial neural network, and the artificial neural network may include a plurality of layers. Each of the plurality of neural network layers has a plurality of weight values, and performs a neural network operation using an operation result of a previous layer and an operation between the plurality of weight values. The plurality of weight values that the plurality of neural network layers have may be optimized by a learning result of the artificial intelligence model. For example, the plurality of weight values may be updated so that a loss value or a cost value acquired from the artificial intelligence model is reduced or minimized during a learning process. Here, the weight value of each of the layers may be referred to as a parameter of each of the layers.

Here, the artificial neural network may include at least one of various types of neural network models such as a convolution neural network (CNN), a 1-dimension convolution neural network (1DCNN) a region with convolution neural network (R-CNN), a region proposal network (RPN), a recurrent neural network (RNN), a stacking-based deep neural network (S-DNN), a state-space dynamic neural network (S-SDNN), a deconvolution network, a deep belief network (DBN), a restricted boltzman machine (RBM), a fully convolutional network, a long short-term memory (LSTM) network, a bidirectional-long short-term memory (Bi-LSTM) network classification network, a plain residual network, a dense network, a hierarchical pyramid network, a fully convolutional network, a squeeze and excitation network (SENet), a transformer network, an encoder, a decoder, an auto encoder, or a combination thereof, and the artificial neural network in the disclosure is not limited to the above-described example.

The communication interface 120 includes circuitry, and is a component capable of communicating with external devices and servers. The communication interface 120 may communicate with an external device or server in a wired or wireless communication manner. In this case, the communication interface 120 may include a BluetoothTM module (not shown), a Wi-Fi module (not shown), an infrared (IR) module, a local area network (LAN) module, an Ethernet module, or the like. Here, each communication module may be implemented in the form of at least one hardware chip. The wireless communication module may include at least one communication chip that performs communication according to various wireless communication standards, such as zigbee, universal serial bus (USB), mobile industry processor interface camera serial interface (MIPI CSI), 3rd generation (3G), 3rd generation partnership project (3GPP), long term evolution (LTE), LTE advanced (LTE-A), 4th generation (4G), and 5th generation (5G), in addition to the above-mentioned communication methods. However, this is merely an example, and the communication interface 120 may use at least one communication module among various communication modules.

The user interface 130 is a component for receiving a user instruction for controlling the electronic apparatus 100. The user interface 130 may be implemented as a device such as a button, a touch pad, a mouse, or a keyboard, or may also be implemented as a touch screen capable of performing both a display function and a manipulation input function. Here, the button may be any type of button such as a mechanical button, a touch pad, or a wheel formed in a certain area of an external side of a main body of the electronic apparatus 100 such as a front side portion, a lateral side portion, or a rear side portion. The electronic apparatus 100 may acquire various user inputs through the user interface 130.

The speaker 140 may output not only various types of audio data processed by an input/output interface but also various notification sounds or voice messages.

The microphone 150 may acquire voice data such as a user's voice. For example, the microphone 150 may be formed integrally with the electronic apparatus 100 in an upward, forward, or lateral direction. The microphone 150 may include various components such as a microphone that collects user voice in an analog form, an amplifier circuit that amplifies the collected user voice, an analog to digital (A/D) conversion circuit that samples the amplified user voice and converts the sampled user voice into a digital signal, and a filter circuit that removes noise components from the converted digital signal.

The processor 160 may control overall operations and functions of the electronic apparatus 100. Specifically, the processor 160 is connected to the components of the electronic apparatus 100 including the memory 110, and may control the overall operations of the electronic apparatus 100 by executing at least one instruction stored in the memory 110 as described above.

The processor 160 may be implemented in various ways. For example, the processor 160 may be implemented as at least one of an application specific integrated circuit (ASIC), an embedded processor, a microprocessor, a hardware control logic, a hardware finite state machine (FSM), and a digital signal processor (DSP). Meanwhile, the term "processor 160" herein may be used as a meaning including a central processing unit (CPU), a graphic processing unit (GPU), a main processing unit (MPU), or the like.

The operations of the processor 160 for implementing various embodiments of the disclosure may be implemented through the artificial intelligence model 111 and the plurality of modules.

Specifically, data related to the artificial intelligence model 111 and the plurality of modules according to the disclosure may be stored in the memory 110. After accessing the memory 110 and loading the data related to the artificial intelligence model 111 and the plurality of modules into a memory or a buffer in the processor 160, the processor 160 may implement various embodiments according to the disclosure using the artificial intelligence model 111 and the plurality of modules. At this time, the plurality of modules may include a training data acquisition module 161, an embedding module 162, a training module 163, a synthesis module 164, and an update module 165.

However, at least one of the artificial intelligence model 111 and the plurality of modules according to the disclosure may be implemented as hardware and included in the processor 160 in the form of a system on chip.

The training data acquisition module 161 acquires a plurality of training data. In this case, the training data may be training data for training the artificial intelligence model 111.

The training data acquisition module 161 acquires audio data for training the artificial intelligence model 111 through the microphone 150. Meanwhile, the training data may be implemented as various types of data, such as images and videos, as well as the audio data.

In addition, the training data acquisition module 161 may acquire a plurality of training data of which classes are labeled. For example, when the plurality of training data are audio data, each of the plurality of training data may be labeled as a human voice class, a music sound class, or a clap sound class.

Alternatively, the training data acquisition module 161 may acquire training data of which a class is not labeled. At this time, the training data acquisition module 161 may label one of a plurality of classes according to a degree of similarity between features acquired from the training data.

The embedding module 162 acquires a plurality of embedding vectors that are mappable to an embedding space for the plurality of training data, respectively. In this case, the plurality of embedding vectors correspond to the plurality of training data, respectively.

Specifically, the embedding module 162 may acquire a plurality of embedding vectors by extracting features from the plurality of training data, respectively.

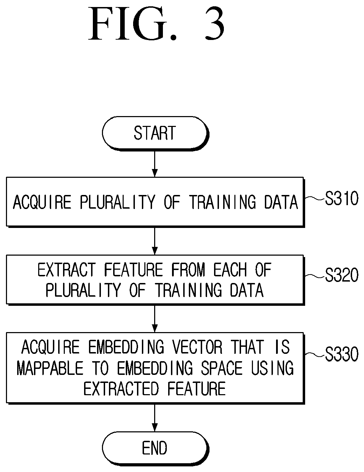

FIG. 3 is a flowchart for explaining a method of acquiring an embedding vector according to an embodiment of the disclosure.

Referring to FIG. 3, when the plurality of training data is acquired, in operation S310, the embedding module 162 may extract a feature from each of the plurality of training data, in operation S320. By analyzing the training data frame by frame in time and frequency domains, the embedding module 162 may extract a feature such as energy, mel frequency cepstral coefficients (MFCC), centroid, volume, power, sub-band energy, low short-time energy ratio, zero crossing rate, frequency centroid, frequency bandwidth, spectral flux, cepstral change flux, or loudness.

Alternatively, the embedding module 162 may extract features of the plurality of training data using a principal component analysis (PCA) or independent component analysis (ICA) method.

Then, the embedding module 162 acquires a plurality of embedding vectors that are mappable to an embedding space using at least one of the extracted features, in operation S330. At this time, the plurality of embedding vectors are mappable to the embedding space as illustrated in FIG. 3. In this case, training data in the same class or similar training data may be located at a short distance, and training data in different classes or dissimilar training data may be located at a far distance. Here, each of the embedding vectors may correspond to each feature point shown in the embedding space.

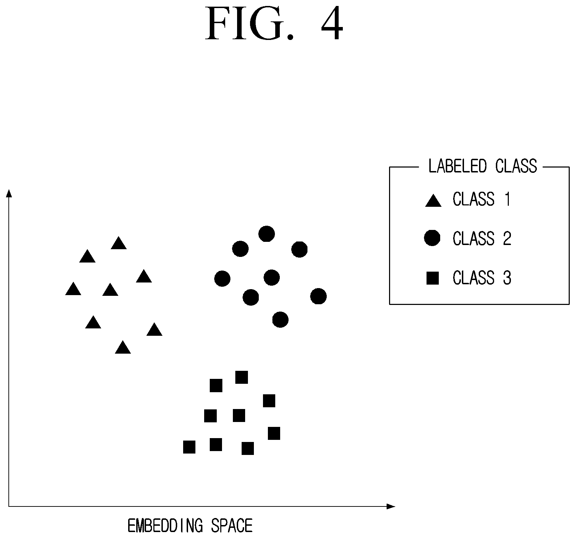

FIG. 4 is a diagram for explaining an embedding space according to an embodiment of the disclosure.

Meanwhile, referring to FIG. 4, the plurality of embedding vectors may be embedding vectors of which classes are labeled. For example, as illustrated in FIG. 3, CLASS 1, CLASS 2, or CLASS 3 may be labeled to each of the plurality of embedding vectors. In this case, CLASS 1 corresponds to a human voice, CLASS 2 corresponds to a music sound, and CLASS 3 corresponds to a noise. Alternatively, CLASS 1 may correspond to a voice of A, CLASS 2 may correspond to a voice of B, and CLASS 3 may correspond to a voice of C.

In this case, the classes of the plurality of embedding vectors may correspond to the labeled classes of the plurality of training data. Meanwhile, the plurality of training data may be data of which classes are labeled, but this is merely an example, and the training data acquisition module 161 may acquire a plurality of training data of which classes are not labeled. In this case, the embedding module 162 may label classes of a plurality of embedding vectors (or a plurality of training data) based on clusters formed by the embedding vectors in the embedding space.

Then, based on the plurality of embedding vectors, the training module 163 trains the artificial intelligence model 111 classifying the plurality of training data. In this case, data input to the artificial intelligence model 111 may be training data or an embedding vector acquired from the training data. In addition, data output by the artificial intelligence model 111 is a predicted class of the input data.

In this case, the training module 163 may train the artificial intelligence model 111 through supervised learning using at least some of the training data (or the embedding vectors) as a criterion for determination. For example, the training module 163 may train the artificial intelligence model 111 in a supervised learning manner by using an embedding vector as an independent variable and a class labeled to the embedding vector as a dependent variable.

Alternatively, the training module 163 may train the artificial intelligence model 111 through unsupervised learning for finding a criterion for determining a class by learning by itself using the training data (or the embedding vectors) without any particular guidance. Also, the training module 163 may train the artificial intelligence model 111 through reinforcement learning, for example, using feedback on whether a situation determination result based on learning is correct.

Also, the training module 163 may train the artificial intelligence model 111, for example, using a learning algorithm including error back-propagation or gradient descent.

Then, when training data or an embedding vector is input, the trained artificial intelligence model 111 may classify the input data based on its location in the embedding space.

Meanwhile, the training module 163 may train the artificial intelligence model 111, but this is merely an example, and the artificial intelligence model 111 may be a model trained by a separate external device or a separate external server and stored in the memory 110.

In addition, the synthesis module 164 identifies misclassified data among results output by the artificial intelligence model 111. In this case, the misclassified data is data of which a labeled class is different from a class predicted by the artificial intelligence model 111 after the data is input to the artificial intelligence model 111. For example, when the artificial intelligence model 111 receives an embedding vector to which "music sound" is labeled as an input and outputs "human voice" as a classification result, the embedding vector for "music sound" may be a misclassified embedding vector.

In addition, based on the identified misclassified data, the synthesis module 164 retrains the artificial intelligence model 111 by additionally synthesizing training data.

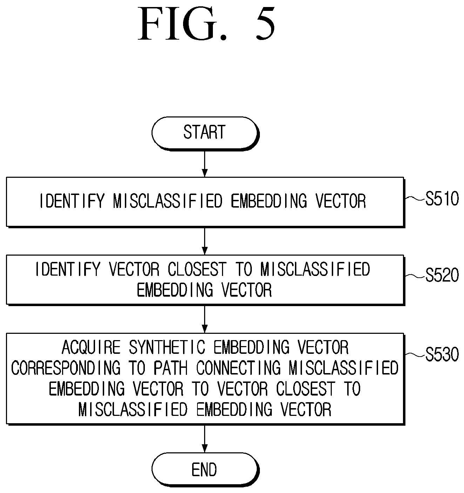

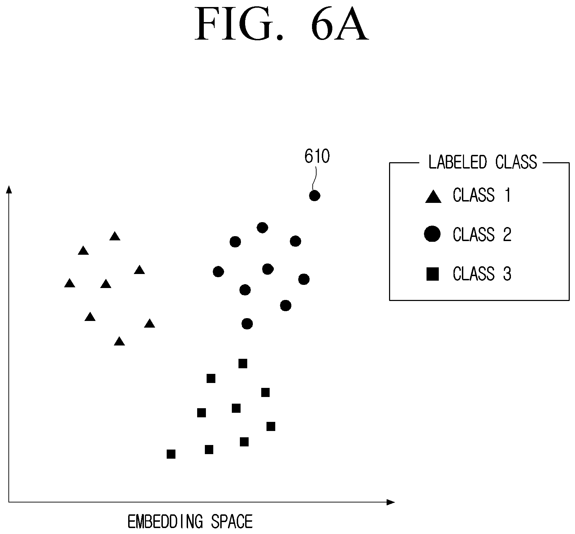

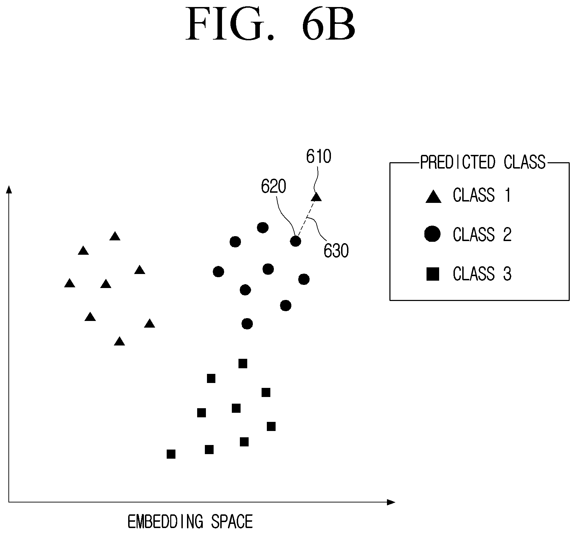

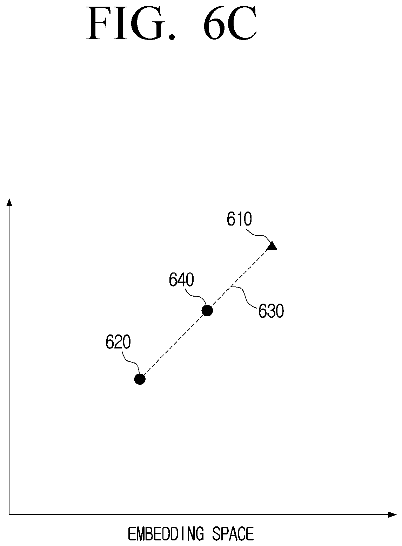

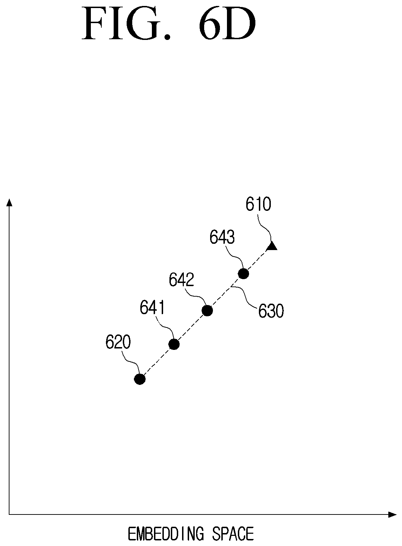

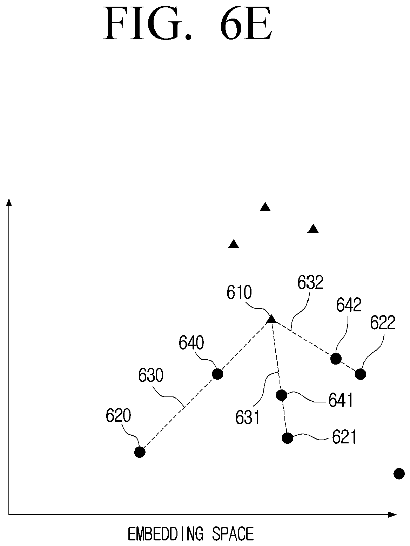

FIG. 5 is a flowchart for explaining a method of acquiring a synthetic embedding vector according to an embodiment of the disclosure. FIGS. 6A, 6B, 6C, 6D, and 6E are diagrams for explaining a method of acquiring a synthetic embedding vector according to various embodiments of the disclosure.

Referring to FIG. 5, the synthesis module 164 identifies an embedding vector misclassified by the artificial intelligence model 111 among a plurality of embedding vectors, in operation S510.

Referring to FIG. 6A, a plurality of embedding vectors acquired from training data are mappable to an embedding space. In this case, a labeled class of each of the plurality of embedding vectors may be CLASS 1, CLASS 2, or CLASS 3 as illustrated in FIG. 6A. Here, a labeled class of a first embedding vector 610 among the plurality of embedding vectors may be CLASS 2.

Also, a class predicted by the artificial intelligence model 111 trained based on the plurality of embedding vectors may be CLASS 1, CLASS 2, or CLASS 3 as illustrated in FIG. 6B.

In this case, the first embedding vector 610 among the plurality of embedding vectors may be input to the artificial intelligence model 111, and a class predicted by the artificial intelligence model 111 may be CLASS 1. That is, the labeled class of the first embedding vector 610 may be CLASS 2, and the predicted class of the first embedding vector 610 may be CLASS 1. In this case, the synthesis module 164 may identify the first embedding vector 610 as a misclassified embedding vector. Meanwhile, when there are a plurality of misclassified embedding vectors, the synthesis module 164 may identify a plurality of misclassified embedding vectors.

Then, the synthesis module 164 identifies an embedding vector closest to the misclassified embedding vector in the embedding space, in operation S520.

In this case, the closest embedding vector is an embedding vector of which a class is predicted to be the same as the labeled class of the misclassified embedding vector. That is, the synthesis module 164 identifies an embedding vector close to the misclassified embedding vector among embedding vectors of which labeled classes (or predicted classes) are the same as the labeled class of the misclassified embedding vector.

Referring to FIG. 6B, when the first embedding vector 610 is identified as a misclassified embedding vector, the synthesis module 164 identifies a second embedding vector 620 located at a closest distance from the first embedding vector 610 in the embedding space as an embedding vector closest to the misclassified embedding vector among embedding vectors of which classes are predicted to be the same as the labeled class of the first embedding vector 610, i.e., CLASS 1.

Also, the closest embedding vector is an embedding vector successfully classified by the artificial intelligence model 111. That is, the labeled class of the closest embedding vector is the same as the predicted class of the closest embedding vector. In other words, the synthesis module 164 identifies an embedding vector closest to the misclassified embedding vector among a plurality of embedding vectors successfully classified by the artificial intelligence model 111.

Then, the synthesis module 164 acquires a synthetic embedding vector corresponding to a path connecting the misclassified embedding vector to the embedding vector closest to the misclassified embedding vector in the embedding space, in operation S530. Meanwhile, the path between embedding vectors herein may refer to a shortest path connecting embedding vectors to each other in the embedding space. That is, the path connecting the misclassified embedding vector to the embedding vector closest to the misclassified embedding vector may refer to a shortest path connecting the misclassified embedding vector to the embedding vector closest to the misclassified embedding vector in the embedding space.

Specifically, referring to FIG. 6B, the synthesis module 164 identifies a path 630 connecting the misclassified embedding vector 610 and the second embedding vector 620 closest to the misclassified embedding vector 610.

At this time, the synthesis module 164 acquires a synthetic embedding vector located at a point of the path connecting the misclassified embedding vector to the embedding vector closest to the misclassified embedding vector in the embedding space, by synthesizing the misclassified embedding vector and the embedding vector closest to the misclassified embedding vector.

Referring to FIG. 6C, the synthesis module 164 identifies the path 630 connecting the first embedding vector 610 and the second embedding vector 620 to each other, and acquire a synthetic embedding vector 640 located at a point on the path 630. At this time, the synthesis module 164 acquires the synthetic embedding vector 640 by synthesizing the first embedding vector 610 and the second embedding vector 620, but this is merely an example, and the synthesis module 164 may acquire an embedding vector located at a point on the path 630 based on information related to the path 630.

In addition, the synthetic embedding vector 640 may be located at a center point between the first embedding vector 610 and the second embedding vector 620 in the embedding space, but this is merely an example, and the synthetic embedding vector 640 may be located at any point on the path.

Meanwhile, the synthesis module 164 may acquire one synthetic embedding vector located at a point of the path, but this is merely an example, and the synthesis module 164 may acquire a plurality of synthetic embedding vectors located at a plurality of points of the path.

Referring to FIG. 6D, when the path 630 is identified, the synthesis module 164 may acquire a plurality of synthetic embedding vectors 641, 642, and 643 located at a plurality of points on the path 630.

Meanwhile, when a misclassified embedding vector is identified, the synthesis module 164 may identify one embedding vector closest to the misclassified embedding vector, but this is merely an example, and the synthesis module 164 may identify a plurality of embedding vectors close to the misclassified embedding vector in order of short distance. At this time, the synthesis module 164 may acquire one or more synthetic embedding vectors each to be located at a point on a path connecting the misclassified embedding vector to each of the plurality of identified embedding vectors.

Referring to FIG. 6E, the synthesis module 164 may identify a plurality of embedding vectors 620, 621, and 622 in an order in which the plurality of embedding vectors are close to the first embedding vector 610. Then, the synthesis module 164 may identify a plurality of paths 630, 631, and 632 between the first embedding vector and the plurality of embedding vectors 620, 621, and 622, respectively.

Then, still referring to FIG. 6E, the synthesis module 164 may acquire a plurality of synthetic embedding vectors 640, 641, and 642 located on the plurality of paths 630, 631, and 632, respectively.

Alternatively, the synthesis module 164 may identify at least one embedding vector within a predetermined distance from the misclassified embedding vector in the embedding space. At this time, the synthesis module 164 may acquire one or more synthetic embedding vectors to be located at a point on a path connecting each of the at least one embedding vector and the misclassified embedding vector to each other.

Meanwhile, the synthesis module 164 may identify one misclassified embedding vector, and acquire a synthetic embedding vector based on the identified misclassified embedding vector, but this is merely an example, and the synthesis module 164 may identify a plurality of misclassified embedding vectors, and acquire a plurality of synthetic embedding vectors based on the plurality of misclassified embedding vectors.

At this time, similarly to the above-described method, the synthesis module 164 may identify embedding vectors close to each of the plurality of misclassified embedding vectors, and acquire a plurality of synthetic embedding vectors located on a plurality of paths each connecting each of the plurality of misclassified embedding vectors to each of embedding vectors close to the misclassified embedding vector.

Meanwhile, when the synthetic embedding vector is acquired, the synthesis module 164 labels a class of the acquired synthetic embedding vector. At this time, the synthesis module 164 labels the class the synthetic embedding vector to be the same as the class of the closest embedding vector. Alternatively, the synthesis module 164 may label the class of the synthetic embedding vector to be the same as the labeled class of misclassified embedding vector.

Then, the update module 165 updates the artificial intelligence model 111 by adding the synthetic embedding vector to training data and re-training the artificial intelligence model 111. At this time, the synthetic embedding vector added to the training data is an embedding vector of which a class is labeled. In addition, the training module 163 may update the artificial intelligence model 111 using a method such as supervised learning, unsupervised learning, error back-propagation, or gradient descent as described above.

Meanwhile, when the performance of the trained (or re-trained) artificial intelligence model is lower than or equal to a predetermined standard, the update module 165 re-train and update the artificial intelligence model 111 by re-identifying an embedding vector misclassified by the artificial intelligence model and additionally acquiring a synthetic embedding vector.

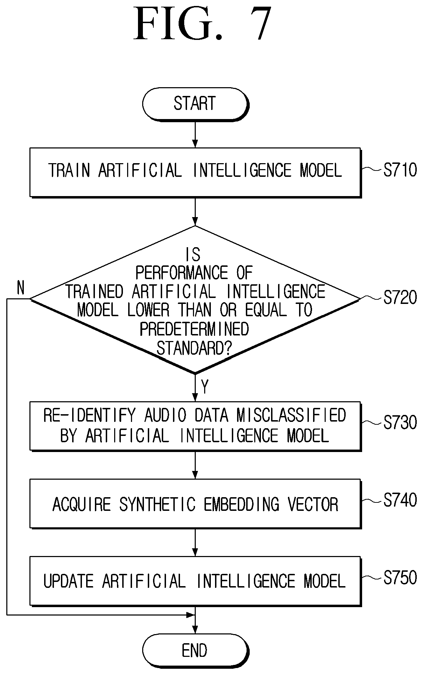

FIG. 7 is a flowchart for explaining a method of re-training an artificial intelligence model according to an embodiment of the disclosure.

Specifically, referring to FIG. 7, when the artificial intelligence model 111 is trained (or re-trained), in operation S710, the update module 165 identifies whether or not the performance of the trained artificial intelligence model 111 is lower than or equal to the predetermined standard, in operation S720. Using some of the training data as verification data, the update module 165 identifies performance of the artificial intelligence model 111 based on whether a labeled class included in the verification data is similar to a predicted class, and identify whether the identified performance is higher than or equal to a reference value.

For example, among all data input to the artificial intelligence model 111, 80% of the data may be data successfully classified by the artificial intelligence model 111, and 20% of the data may be misclassified data. At this time, the update module 165 may identify that the performance of the artificial intelligence model 111 is lower than or equal to the predetermined standard by comparing a classification success rate of the artificial intelligence model 111, i.e., 80%, with the predetermined standard, i.e., 90%.

When it is identified that the performance of the artificial intelligence model 111 is lower than or equal to the predetermined standard (Yes (Y) at operation 720), the update module 165 may re-identify the misclassified embedding vector, in operation S730.

Then, similarly to the above-described method, the update module 165 may acquire a synthetic embedding vector located at a point on a path connecting the re-identified misclassified embedding vector to an embedding vector close to the re-identified misclassified embedding vector, in operation S740. Then, the update module 165 may update the artificial intelligence model 111 by adding, to the training data, a synthetic embedding vector corresponding to a path connecting the re-identified misclassified embedding vector to an embedding vector closest to the misclassified embedding vector, in operation S750.

Meanwhile, the artificial intelligence model 111 may be stored in the memory 110 of the electronic apparatus 100, but this is merely an example, and the artificial intelligence model may be stored in an external device. Then, the electronic apparatus 100 may acquire an embedding vector for training or updating the artificial intelligence model and transmit the embedding vector to the external device to update the artificial intelligence model stored in the external device.

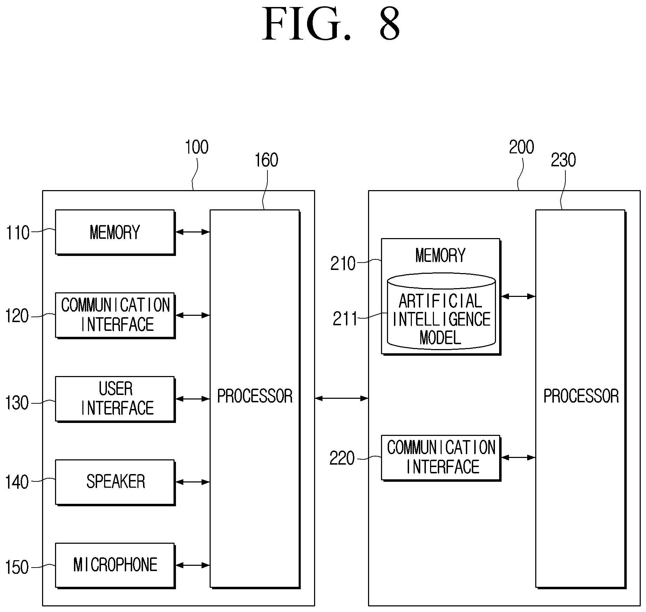

FIG. 8 is a block diagram for explaining configurations of an electronic apparatus and an external device according to an embodiment of the disclosure.

Specifically, referring to FIG. 8, the electronic apparatus 100 may communicate with an external device 200 to transmit/receive data. At this time, the electronic apparatus 100 may directly communicate with the external device 200, but this is merely an example, and the electronic apparatus 100 may communicate with the external device 200 via a separate external device. For example, in a case where the electronic apparatus 100 is an earphone, the electronic apparatus 100 may communicate with the external device 200 which is a server through a smartphone. Alternatively, in a case where the electronic apparatus 100 is an earphone and the external device is a smartphone, the electronic apparatus 100 may communicate with the external device 200, which is a smartphone, through a BluetoothTM module.

The external device 200 may include a memory 210, a communication interface 220, and a processor 230. In this case, the memory 210 may store an artificial intelligence model 211 that classifies input data when the data is input.

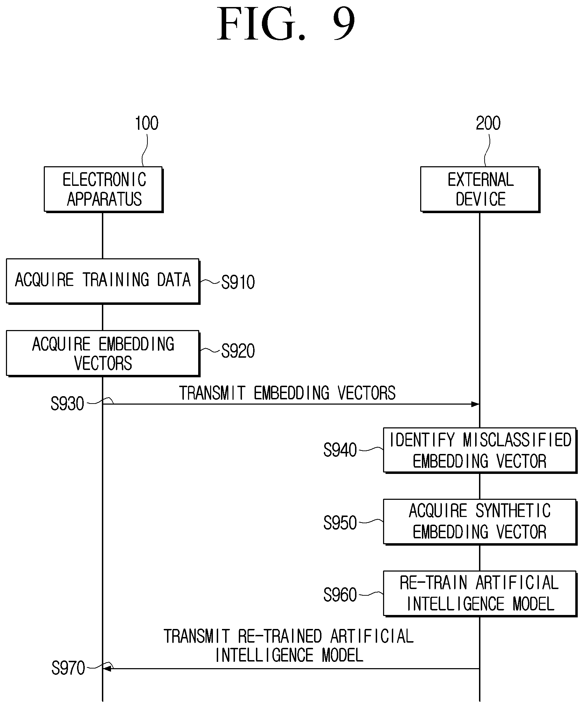

FIG. 9 is a sequence diagram for explaining operations of an electronic apparatus, an external device, and a server according to an embodiment of the disclosure.

Referring to FIG. 9, the electronic apparatus 100 may acquire training data, in operation S910. For example, the electronic apparatus 100 may acquire voice data as training data through the microphone 150.

Alternatively, the electronic apparatus 100 may acquire training data from a separate external sensor. For example, in a case where the electronic apparatus 100 is a smartphone, the electronic apparatus 100 may receive recorded voice data from an earphone including a microphone.

Based on the acquired training data, the electronic apparatus 100 may acquire embedding vectors, in operation S920. The electronic apparatus 100 acquires embedding vectors including information about features of the voice data by extracting the features from the training data.

Accordingly, the electronic apparatus 100 may transmit the acquired embedding vectors to the external device 200, in operation S930. That is, the electronic apparatus 100 may transmit the embedding vectors to the external device 200, rather than transmitting the original training data to the external device 200, and accordingly, the electronic apparatus 100 does not need to transmit training data including user's personal information (e.g., audio data in which voice is recorded) to the external device 200.

When the embedding vectors are received, the external device 200 may input the received embedding vectors to the artificial intelligence model 211 to identify a misclassified embedding vector, in operation S940.

Based on the misclassified embedding vector, the external device 200 acquires a synthetic embedding vector located on a path connecting the misclassified embedding vector to an embedding vector close to the misclassified embedding vector, similarly to the above-described method, in operation S950.

The external device 200 re-trains the artificial intelligence model 211 using the synthetic embedding vector, in operation S960.

When the artificial intelligence model is re-trained, the external device 200 may transmit the re-trained artificial intelligence model 211 to the electronic apparatus 100, in operation S970.

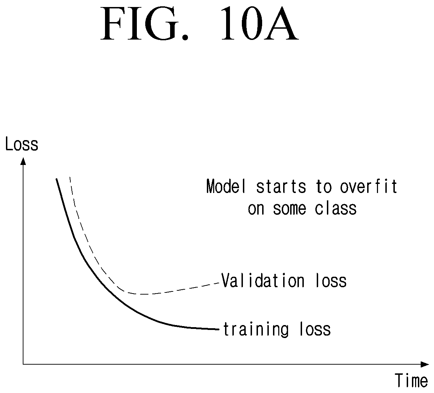

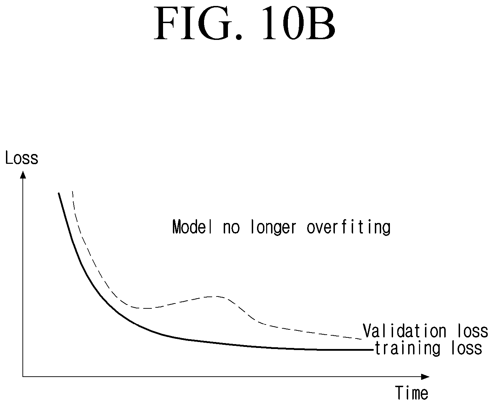

FIGS. 10A and 10B are diagrams for explaining a performance of an artificial intelligence model according to various embodiments of the disclosure.

Referring to FIG. 10A, as the training of the artificial intelligence model classifying input data progresses, a validation loss may increase for a specific class, resulting in an occurrence of overfitting. At this time, in order to add training data to solve the overfitting problem, a lot of time and resources are required.

In contrast, referring to FIG. 10B, if the artificial intelligence model is trained or updated by additionally synthesizing the training data according to the above-described method, it is possible to solve the overfitting problem occurring in the artificial intelligence model.

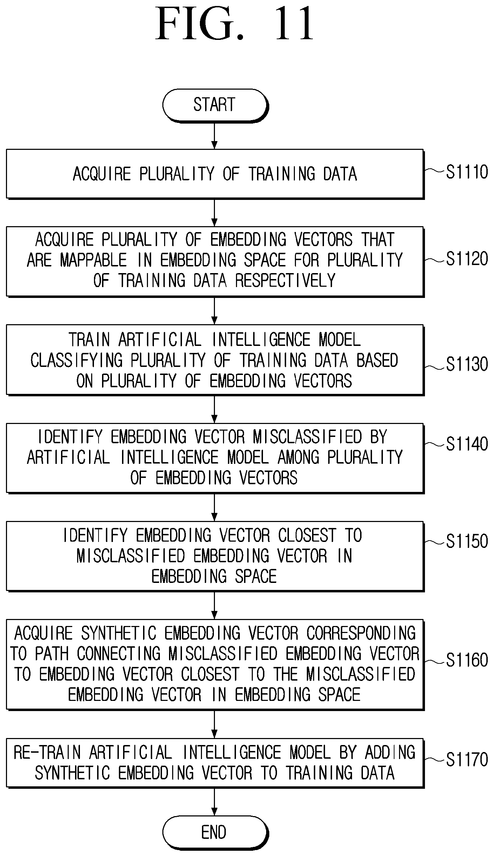

FIG. 11 is a flowchart for explaining a control method of the electronic apparatus 100 according to an embodiment of the disclosure.

The electronic apparatus 100 acquires a plurality of training data, in operation S1110.

Then, the electronic apparatus 100 acquires a plurality of embedding vectors that are mappable to an embedding space for the plurality of training data, respectively, in operation S1120. In this case, the electronic apparatus 100 may acquire a plurality of embedding vectors by extracting features from the plurality of training data, respectively.

Then, the electronic apparatus 100 trains the artificial intelligence model 111 classifying the plurality of training data based on the plurality of embedding vectors, in operation S1130.

Then, the electronic apparatus 100 identifies an embedding vector misclassified by the artificial intelligence model among the plurality of embedding vectors, in operation S1140.

Specifically, the electronic apparatus 100 specifies a first embedding vector among the plurality of embedding vectors. Then, the electronic apparatus 100 identifies whether a labeled class of the first embedding vector is different from a class predicted by the artificial intelligence model 111.

At this time, when the labeled class of the first embedding vector is the same as the predicted class of the first embedding vector, the electronic apparatus 100 may identify the first embedding vector as a successfully classified embedding vector. When the first embedding vector is identified as a successfully classified embedding vector, the electronic apparatus 100 may specify a second embedding vector among the plurality of embedding vectors. Then, the electronic apparatus 100 may identify whether a labeled class of the second embedding vector is different from a class predicted by the artificial intelligence model 111.

When the labeled class of the second embedding vector is different from the predicted class of the second embedding vector, the electronic apparatus 100 identifies the second embedding vector as a misclassified embedding vector. For example, the labeled class of the second embedding vector may be "music sound," and the class predicted by inputting the second embedding vector to the artificial intelligence model 111 may be "human voice." At this time, the electronic apparatus 100 may identify the second embedding vector as a misclassified embedding vector. Then, when the misclassified embedding vector is identified, the electronic apparatus 100 identifies an embedding vector closest to the misclassified embedding vector in the embedding space, in operation S1150. At this time, the closest embedding vector is an embedding vector classified successfully by the artificial intelligence model 111.

Then, the electronic apparatus 100 acquires a synthetic embedding vector corresponding to a path connecting the misclassified embedding vector to the embedding vector closest to the misclassified embedding vector in the embedding space, in operation S1160. In this case, the synthetic embedding vector is located at a point of the path connecting the misclassified embedding vector to the embedding vector closest to the misclassified embedding vector in the embedding space.

Specifically, the electronic apparatus 100 acquires a synthetic embedding vector using any of various data synthesis methods. In this case, the data synthesis method may be a method using a model capable of generating a spectrogram or a raw waveform. In this case, the model for data synthesis may be stored in the memory 110.

According to an embodiment, the electronic apparatus 100 may generate data using a generative adversarial network (GAN).

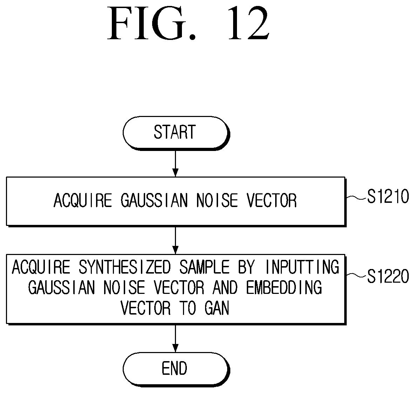

FIG. 12 is a flow chart for explaining a method of acquiring a synthesized sample using a GAN according to an embodiment of the disclosure.

Referring to FIG. 12, the electronic apparatus 100 may acquire a Gaussian noise vector, in operation S1210. At this time, the Gaussian noise vector may be a vector including a value randomly acquired from a Gaussian probability distribution.

Then, the electronic apparatus 100 may acquire a synthesized sample by inputting the acquired Gaussian noise vector and an embedding vector to the GAN, in operation S1220. That is, when a Gaussian noise vector and an embedding vector are input to the GAN, the GAN can output a synthesized sample.

At this time, the embedding vector input to the GAN may be at least one of a misclassified embedding vector and a vector closest to the misclassified embedding vector.

Meanwhile, the Gaussian noise vector includes a value randomly acquired from the Gaussian probability distribution, and at this time, the randomly acquired value may provide variability of data within a specific class. This randomness makes it possible to more efficiently synthesize data.

In addition, the synthesized sample may be a synthetic embedding vector, but this is merely an example, and the electronic apparatus 100 may acquire a synthetic embedding vector by extracting a feature from the synthesized sample. At this time, the synthesized sample may correspond to a point on a shortest path connecting a misclassified embedding vector to an embedding vector closest to the misclassified embedding vector.

According to another embodiment, the electronic apparatus 100 may synthesize data using a variational auto encoder (VAE) and a variational auto decoder (VAD).

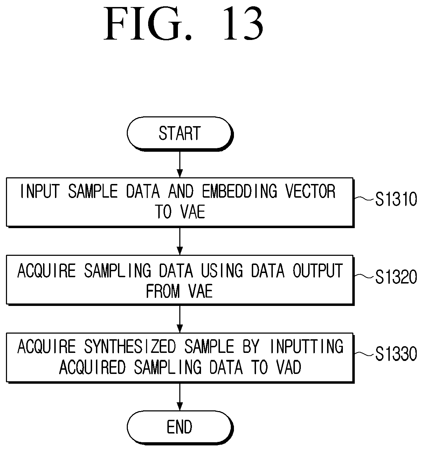

FIG. 13 is a flow chart for explaining a method of acquiring a synthesized sample using a VAE and a VAD according to an embodiment of the disclosure.

Referring to FIG. 13, the electronic apparatus 100 may input sample data and an embedding vector to VAE, in operation S1310. Here, the sample data may be training data corresponding to the embedding vector. That is, the embedding vector input to the VAE may be an embedding vector acquired by extracting a feature from the sample data.

In addition, the electronic apparatus 100 may acquire sampling data using data output from the VAE, in operation S1320. At this time, the sampling data may include a value randomly extracted from the data output from the VAE. Alternatively, the sampling data may be data acquired using a value randomly extracted from a Gaussian distribution or the like. This random value may provide variability of data within a specific class. This randomness makes it possible to more efficiently synthesize data.

Thereafter, the electronic apparatus 100 may acquire a synthesized sample by inputting the acquired sampling data to the VAD, in operation S1330. The synthesized sample may be a synthetic embedding vector, but this is merely an example, and the electronic apparatus 100 may acquire a synthetic embedding vector by extracting a feature from the synthesized sample. In addition, the synthesized sample may correspond to a point on a shortest path connecting a misclassified embedding vector to an embedding vector closest to the misclassified embedding vector.

Meanwhile, the electronic apparatus 100 may acquire synthesized data in various ways other than the method using GAN or VAE.

Then, the electronic apparatus 100 may re-train the artificial intelligence model 111 by adding the synthesized data to the training data, in operation S1170.

Here, the synthesized data may be a synthesized embedding vector or a synthesized sample.

Meanwhile, when a plurality of pieces of synthesized data are acquired, the electronic apparatus 100 may add, to the training data, data corresponding to a point on a shortest path connecting a misclassified embedding vector to an embedding vector closest to the misclassified embedding vector among the plurality of pieces of synthesized data.

Meanwhile, the electronic apparatus 100 may verify the synthesized data and add the synthesized data to the training data based on a verification result. Specifically, the electronic apparatus 100 may compare the synthesized data with the training data pre-stored in the memory 110, and determine whether to add the synthesized data to the training data based on a comparison result. At this time, the electronic apparatus 100 may acquire a value indicating a degree of similarity between the pre-stored training data and the synthesized data, and add the synthesized data to the training data when the acquired value indicating the degree of similarity is larger than or equal to a predetermined value.

Alternatively, the electronic apparatus 100 may identify whether to add the synthesized data to the training data using a result value acquired by inputting the synthesized data to the artificial intelligence model 111. That is, the electronic apparatus 100 may verify the artificial intelligence model 111 using the synthesized data, and re-train the artificial intelligence model 111 based on a verification result.

Specifically, the electronic apparatus 100 may identify whether a labeled class of the synthesized data is different from a class predicted by the artificial intelligence model 111. When the labeled class of the synthesized data is different from the class predicted by the artificial intelligence model 111, the electronic apparatus 100 may re-train the artificial intelligence model 111 using the synthesized data.

Alternatively, the electronic apparatus 100 may verify the artificial intelligence model 111 using a plurality of pieces of synthesized data, and re-train the artificial intelligence model 111 based on a verification result. Specifically, the electronic apparatus 100 may identify a degree of accuracy of the artificial intelligence model 111 based on a result value output by inputting a plurality of pieces of synthesized data to the artificial intelligence model 111. At this time, when the degree of accuracy is lower than or equal to a predetermined value, the electronic apparatus 100 may re-train the artificial intelligence model 111 by adding the plurality of pieces of synthesized data to the training data. Alternatively, the electronic apparatus 100 may compare the identified degree of accuracy with a degree of accuracy of a second artificial intelligence model stored in the memory 110 or an external server, and re-train the artificial intelligence model 111 when the identified degree of accuracy is lower than or equal to the degree of accuracy of the second artificial intelligence model.

In addition, when the performance of the re-trained artificial intelligence model 111 is lower than or equal to a predetermined standard, the electronic apparatus 100 may update the artificial intelligence model 111, by re-identifying an embedding vector misclassified by the artificial intelligence model, and acquiring a synthetic embedding vector corresponding to a path connecting the re-identified misclassified embedding vector to an embedding vector closest to the re-identified misclassified embedding vector in the embedding space. Meanwhile, the functions related to artificial intelligence according to the disclosure may be operated through the processor 160 and the memory 110 of the electronic apparatus 100.

The processor 160 may include one or more processors. In this case, the one or more processors may include a general-purpose processor such as a central processing unit (CPU) or an application processor (AP), a graphic-dedicated processor such as a graphic processing unit (GPU) or a vision processing unit (VPU), or an artificial intelligence-dedicated processor such as a neural processing unit (NPU) or a tensor processing unit (TPU).

As an embodiment of the disclosure, in a case where a system on chip (SoC) included in the electronic apparatus 100 includes a plurality of processors, the electronic apparatus 100 may perform an operation related to artificial intelligence (e.g., an operation related to learning or inference of the artificial intelligence model) using a graphic-dedicated processor or an artificial intelligence-dedicated processor among the plurality of processors, and may perform a general operation of the electronic apparatus using a general-purpose processor among the plurality of processors. For example, the electronic apparatus 100 may perform an operation related to artificial intelligence using at least one of the GPU, the VPU, the NPU, and the TPU specialized for convolution operation among the plurality of processors, and may perform a general operation of the electronic apparatus 100 using at least one of the CPU and the AP among the plurality of processors.

In addition, the electronic apparatus 100 may perform an operation for a function related to artificial intelligence using multiple cores (e.g., dual cores, quad cores, or the like) included in one processor. In particular, the electronic apparatus may perform a convolution operation in parallel using multiple cores included in the processor. The one or more processors control input data to be processed in accordance with a predefined operating rule or an artificial intelligence model stored in the memory. The predefined operating rule or the artificial intelligence model are created through learning.

Here, the creation through learning denotes that a predefined operating rule or an artificial intelligence model is created with desired characteristics by applying a learning algorithm to a plurality of training data. Such learning may be performed in the device itself in which artificial intelligence is performed according to the disclosure, or may be performed through a separate server/system.

The artificial intelligence model may include a plurality of neural network layers. Each of the layers has a plurality of weight values, and performs a layer operation using an operation result of a previous layer and an operation between the plurality of weight values. Examples of neural networks include a convolutional neural network (CNN), a deep neural network (DNN), a recurrent neural network (RNN), a restricted boltzmann machine (RBM), a deep belief network (DBN), a bidirectional recurrent deep neural network (BRDNN), and a deep Q-network, and the neural network is not limited to the above-described examples unless specified herein.

The learning algorithm is a method of training a predetermined target device (e.g., a robot) using a plurality of training data to allow the predetermined target device to make a decision or make a prediction by itself. Examples of learning algorithms include supervised learning, unsupervised learning, semi-supervised learning, and reinforcement learning, and the learning algorithm is not limited to the above-described examples unless specified herein.

Meanwhile, the term "unit" or "module" used herein refers to a unit configured in hardware, software, or firmware, and may, for example, be used interchangeably with the term "logic," "logical block," "component," "circuit," or the like. The "unit" or "module" may be an integrated component, or a minimum unit for performing one or more functions or a part thereof. For example, the module may be configured as an application-specific integrated circuit (ASIC).

Various embodiments of the disclosure may be implemented as software including instructions that are stored in a machine-readable storage medium (e.g., a computer-readable storage medium). The machine is a device that invokes the stored instruction from the storage medium and is operable in accordance with the invoked instruction, and may include the electronic apparatus 100 according to the embodiments disclosed herein. If the instruction is executed by the processor, a function corresponding to the instruction may be performed either directly by the processor or using other components under the control of the processor. The instruction may include a code generated or executed by a compiler or an interpreter. The machine-readable storage medium may be provided in the form of a non-transitory storage medium. Here, the term "non-transitory" simply denotes that the storage medium is a tangible device without including a signal, irrespective of whether data is semi-permanently or temporarily stored in the storage medium.

According to an embodiment, the method according to the various embodiments disclosed herein may be included in a computer program product for provision. The computer program product may be traded as a product between a seller and a buyer. The computer program product may be distributed in the form of a machine-readable storage medium (e.g., a compact disc read only memory (CD-ROM)), or may be distributed online via an application store (e.g., PlayStore 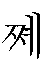 ). If the computer program product is distributed online, at least part of the computer program product may be temporarily generated or at least temporarily stored in a storage medium, such as a memory of a server of a manufacturer, a server of an application store, or a relay server.

Each of the components (e.g., modules or programs) according to various embodiments may include a single entity or multiple entities, and some of the above-described sub-components may be omitted, or other sub-components may be further included in the various embodiments. Alternatively or additionally, some components (e.g., modules or programs) may be integrated into a single entity, and the integrated entity may perform the same or similar functions performed by the respective components before being integrated. According to various embodiments, operations performed by the modules, the programs, or other components may be executed sequentially, in parallel, repeatedly, or heuristically, or at least some of the operations may be executed in different sequences or omitted, or other operations may be added.

## Claims

1. An electronic apparatus comprising:
a memory storing at least one instruction; and
a processor connected to the memory to control the electronic apparatus,
wherein, by executing the at least one instruction, the processor is configured to:
acquire training data comprising a plurality of pieces of training data, wherein the training data are audio data;
based on the training data, acquire a plurality of embedding vectors that are mappable to an embedding space for the plurality of pieces of training data, respectively;
based on the plurality of embedding vectors, train an artificial intelligence model configured for classifying the plurality of pieces of training data as belonging to a class from among a plurality of output classes, wherein the plurality of output classes comprises at least a human voice class, a music sound class and a noise class;
identify a misclassified embedding vector misclassified by the artificial intelligence model among the plurality of embedding vectors;
identify an embedding vector closest to the misclassified embedding vector in the embedding space;
acquire a synthetic embedding vector corresponding to a path connecting the misclassified embedding vector to the embedding vector closest to the misclassified embedding vector in the embedding space; and
re-train the artificial intelligence model by adding the synthetic embedding vector to the training data.

2. The electronic apparatus of claim 1, wherein, by executing the at least one instruction, the processor is further configured to:
acquire the synthetic embedding vector located at a point of the path in the embedding space, by synthesizing the misclassified embedding vector and the embedding vector closest to the misclassified embedding vector.

3. The electronic apparatus according to any one of the previous claims, wherein the misclassified embedding vector comprises an embedding vector of which a labeled class is different from a class predicted by the artificial intelligence model after the embedding vector is input to the artificial intelligence model.

4. The electronic apparatus according to any one of the previous claims, wherein the embedding vector closest to the misclassified embedding vector comprises an embedding vector successfully classified by the artificial intelligence model.

5. The electronic apparatus according to any one of the previous claims, wherein, by executing the at least one instruction, the processor is further configured to:
label a class of the synthetic embedding vector to be a same class as a labeled class of the misclassified embedding vector.

6. The electronic apparatus according to any one of the previous claims, wherein, by executing the at least one instruction, the processor is further configured to:
acquire the plurality of embedding vectors by extracting features from the plurality of pieces of training data, respectively.

7. The electronic apparatus according to any one of the previous claims, wherein, by executing the at least one instruction, the processor is further configured to:
based on a performance of the re-trained artificial intelligence model being lower than or equal to a predetermined standard, re-identify an embedding vector misclassified by the artificial intelligence model; and
update the artificial intelligence model by acquiring a synthetic embedding vector corresponding to a path connecting the re-identified misclassified embedding vector to an embedding vector closest to the re-identified misclassified embedding vector in the embedding space.

8. A computer-implemented method configured for controlling anelectronic apparatus, the computer-implemented method comprising:
acquiring training data comprising a plurality of pieces of training data, wherein the training data are audio data;
based on the training data, acquiring a plurality of embedding vectors that are mappable to an embedding space for the plurality of pieces of training data, respectively;
based on the plurality of embedding vectors, training an artificial intelligence model configured for classifying the plurality of pieces of training data as belonging to a class from among a plurality of output classes, wherein the plurality of output classes comprises at least a human voice class, a music sound class and a noise class;
identifying a misclassified embedding vector misclassified by the artificial intelligence model among the plurality of embedding vectors;
identifying an embedding vector closest to the misclassified embedding vector in the embedding space;
acquiring a synthetic embedding vector corresponding to a path connecting the misclassified embedding vector to the embedding vector closest to the misclassified embedding vector in the embedding space; and
re-training the artificial intelligence model by adding the synthetic embedding vector to the training data.

9. The computer-implemented method of claim 8, wherein, in the acquiring of the synthetic embedding vector, the synthetic embedding vector located at a point of the path in the embedding space is acquired by synthesizing the misclassified embedding vector and the embedding vector closest to the misclassified embedding vector.

10. The computer-implemented method according to any one of the previous claims 8-9, wherein the misclassified embedding vector comprises an embedding vector of which a labeled class is different from a class predicted by the artificial intelligence model after the embedding vector is input to the artificial intelligence model.

11. The computer-implemented method according to any one of the previous claims 8-10, wherein the embedding vector closest to the misclassified embedding vector comprises an embedding vector successfully classified by the artificial intelligence model.

12. The computer-implemented method according to any one of the previous claims 8-11, further comprising:
labeling a class of the synthetic embedding vector to be a same class as a labeled class of the misclassified embedding vector.

13. The computer-implemented method according to any one of the previous claims 8-12, wherein, in the acquiring of the plurality of embedding vectors, the plurality of embedding vectors are acquired by extracting features from the plurality of pieces of training data, respectively.

14. The computer-implemented method according to any one of the previous claims 8-13, further comprising:
based on a performance of the re-trained artificial intelligence model being lower than or equal to a predetermined standard, re-identifying an embedding vector misclassified by the artificial intelligence model; and
updating the artificial intelligence model by acquiring a synthetic embedding vector corresponding to a path connecting the re-identified misclassified embedding vector to an embedding vector closest to the re-identified misclassified embedding vector in the embedding space.

15. A non-transitory computer-readable recording medium including a program for executing a control method of an electronic apparatus, the control method comprising:
acquiring training data comprising a plurality of pieces of training data, wherein the training data are audio data;
based on the training data, acquiring a plurality of embedding vectors that are mappable to an embedding space for the plurality of pieces of training data, respectively;
based on the plurality of embedding vectors, training an artificial intelligence model configured for classifying the plurality of pieces of training data as belonging to a class from among a plurality of output classes, wherein the plurality of output classes comprises at least a human voice class, a music sound class and a noise class;
identifying a misclassified embedding vector misclassified by the artificial intelligence model among the plurality of embedding vectors;
identifying an embedding vector closest to the misclassified embedding vector in the embedding space;
acquiring a synthetic embedding vector corresponding to a path connecting the misclassified embedding vector to the embedding vector closest to the misclassified embedding vector in the embedding space; and
re-training the artificial intelligence model by adding the synthetic embedding vector to the training data.

## Patentansprüche

1. Elektronische Vorrichtung, die Folgendes umfasst:
einen Speicher, in dem mindestens eine Anweisung gespeichert ist; und
einen Prozessor, der mit dem Speicher verbunden ist, um die elektronische Vorrichtung zu steuern,
wobei der Prozessor durch Ausführen der mindestens einen Anweisung zu Folgendem konfiguriert ist:
Erhalten von Trainingsdaten, die eine Vielzahl von Trainingsdatenelementen umfassen, wobei es sich bei den Trainingsdaten um Audiodaten handelt;
basierend auf den Trainingsdaten, Erhalten einer Vielzahl von Einbettungsvektoren, die jeweils auf einen Einbettungsraum für die Vielzahl von Trainingsdatenelementen abbildbar sind;
basierend auf der Vielzahl von Einbettungsvektoren, Trainieren eines Modells der künstlichen Intelligenz, das konfiguriert ist, um die Vielzahl von Trainingsdatenelementen als zu einer Klasse unter einer Vielzahl von Ausgabeklassen gehörend zu klassifizieren, wobei die Vielzahl von Ausgabeklassen mindestens eine menschliche Stimmklasse, eine Musikklangklasse und eine Geräuschklasse umfasst;
Identifizieren eines falsch klassifizierten Einbettungsvektors unter der Vielzahl von Einbettungsvektoren, der durch das Modell der künstlichen Intelligenz falsch klassifiziert wurde;
Identifizieren eines Einbettungsvektors, der dem falsch klassifizierten Einbettungsvektor in dem Einbettungsraum am nächsten liegt;
Erhalten eines synthetischen Einbettungsvektors, der einem Pfad entspricht, der den falsch klassifizierten Einbettungsvektor mit dem Einbettungsvektor verbindet, der dem falsch klassifizierten Einbettungsvektor in dem Einbettungsraum am nächsten liegt; und
erneutes Trainieren des Modells der künstlichen Intelligenz durch Hinzufügen des synthetischen Einbettungsvektors zu den Trainingsdaten.

2. Elektronisches Vorrichtung nach Anspruch 1, wobei der Prozessor durch Ausführen der mindestens einen Anweisung ferner zu Folgendem konfiguriert ist:
Erhalten des synthetischen Einbettungsvektors, der sich an einem Punkt des Pfades in dem Einbettungsraum befindet, durch Synthetisieren des falsch klassifizierten Einbettungsvektors und
des Einbettungsvektors, der dem falsch klassifizierten Einbettungsvektor am nächsten liegt.

3. Elektronische Vorrichtung nach einem der vorhergehenden Ansprüche, wobei der falsch klassifizierte Einbettungsvektor einen Einbettungsvektor umfasst, dessen gekennzeichnete Klasse sich von einer Klasse unterscheidet, die von dem Modell der künstlichen Intelligenz vorhergesagt wurde, nachdem der Einbettungsvektor in das Modell der künstlichen Intelligenz eingegeben wurde.

4. Elektronische Vorrichtung nach einem der vorhergehenden Ansprüche, wobei der Einbettungsvektor, der dem falsch klassifizierten Einbettungsvektor am nächsten liegt, einen Einbettungsvektor umfasst, der von dem Modell der künstlichen Intelligenz erfolgreich klassifiziert wurde.

5. Elektronische Vorrichtung nach einem der vorhergehenden Ansprüche, wobei der Prozessor durch Ausführen der mindestens einen Anweisung ferner zu Folgendem konfiguriert ist:
Kennzeichnen einer Klasse des synthetischen Einbettungsvektors als dieselbe Klasse wie eine gekennzeichnete Klasse des falsch klassifizierten Einbettungsvektors.

6. Elektronische Vorrichtung nach einem der vorhergehenden Ansprüche, wobei der Prozessor durch Ausführen der mindestens einen Anweisung ferner zu Folgendem konfiguriert ist:
Erhalten der Vielzahl von Einbettungsvektoren durch jeweiliges Extrahieren von Merkmalen aus der Vielzahl von Trainingsdatenelementen.

7. Elektronische Vorrichtung nach einem der vorhergehenden Ansprüche, wobei der Prozessor durch Ausführen der mindestens einen Anweisung ferner zu Folgendem konfiguriert ist:
basierend darauf, dass die Leistung des neu trainierten Modells der künstlichen Intelligenz niedriger als oder gleich einem vorbestimmten Standard ist, erneutes Identifizieren eines Einbettungsvektors, der durch das Modell der künstlichen Intelligenz falsch klassifiziert wurde; und
Aktualisieren des Modells der künstlichen Intelligenz durch Erhalten eines synthetischen Einbettungsvektors, der einem Pfad entspricht, der den neu identifizierten, falsch klassifizierten Einbettungsvektor mit einem Einbettungsvektor verbindet, der dem neu identifizierten, falsch klassifizierten Einbettungsvektor in dem Einbettungsraum am nächsten liegt.

8. Computerimplementiertes Verfahren, das zum Steuern einer elektronischen Vorrichtung konfiguriert ist, wobei das computerimplementierte Verfahren Folgendes umfasst:
Erhalten von Trainingsdaten, die eine Vielzahl von Trainingsdatenelementen umfassen, wobei es sich bei den Trainingsdaten um Audiodaten handelt;
basierend auf den Trainingsdaten, Erhalten einer Vielzahl von Einbettungsvektoren, die jeweils auf einen Einbettungsraum für die Vielzahl von Trainingsdatenelementen abbildbar sind;
basierend auf der Vielzahl von Einbettungsvektoren, Trainieren eines Modells der künstlichen Intelligenz, das konfiguriert ist, um die Vielzahl von Trainingsdatenelementen als zu einer Klasse unter einer Vielzahl von Ausgabeklassen gehörend zu klassifizieren, wobei die Vielzahl von Ausgabeklassen mindestens eine menschliche Stimmklasse, eine Musikklangklasse und eine Geräuschklasse umfasst;
Identifizieren eines falsch klassifizierten Einbettungsvektors unter der Vielzahl von Einbettungsvektoren, der durch das Modell der künstlichen Intelligenz falsch klassifiziert wurde;
Identifizieren eines Einbettungsvektors, der dem falsch klassifizierten Einbettungsvektor in dem Einbettungsraum am nächsten liegt;
Erhalten eines synthetischen Einbettungsvektors, der einem Pfad entspricht, der den falsch klassifizierten Einbettungsvektor mit dem Einbettungsvektor verbindet, der dem falsch klassifizierten Einbettungsvektor in dem Einbettungsraum am nächsten liegt; und
erneutes Trainieren des Modells der künstlichen Intelligenz durch Hinzufügen des synthetischen Einbettungsvektors zu den Trainingsdaten.

9. Computerimplementiertes Verfahren nach Anspruch 8, wobei beim Erhalten des synthetischen Einbettungsvektors der synthetische Einbettungsvektor, der sich an einem Punkt des Pfades in dem Einbettungsraum befindet, durch Synthetisieren des falsch klassifizierten Einbettungsvektors und des Einbettungsvektors, der dem falsch klassifizierten Einbettungsvektor am nächsten liegt, erhalten wird.

10. Computerimplementiertes Verfahren nach einem der vorhergehenden Ansprüche 8 und 9, wobei der falsch klassifizierte Einbettungsvektor einen Einbettungsvektor umfasst, dessen gekennzeichnete Klasse sich von einer Klasse unterscheidet, die von dem Modell der künstlichen Intelligenz vorhergesagt wurde, nachdem der Einbettungsvektor in das Modell der künstlichen Intelligenz eingegeben wurde.

11. Computerimplementiertes Verfahren nach einem der vorhergehenden Ansprüche 8 bis 10, wobei der Einbettungsvektor, der dem falsch klassifizierten Einbettungsvektor am nächsten liegt, einen Einbettungsvektor umfasst, der von dem Modell der künstlichen Intelligenz erfolgreich klassifiziert wurde.

12. Computerimplementiertes Verfahren nach einem der vorhergehenden Ansprüche 8 bis 11, das ferner Folgendes umfasst:
Kennzeichnen einer Klasse des synthetischen Einbettungsvektors als dieselbe Klasse wie eine gekennzeichnete Klasse des falsch klassifizierten Einbettungsvektors.

13. Computerimplementiertes Verfahren nach einem der vorhergehenden Ansprüche 8 bis 12, wobei beim Erhalten der Vielzahl von Einbettungsvektoren die Vielzahl von Einbettungsvektoren durch Extrahieren von Merkmalen aus der jeweiligen Vielzahl von Trainingsdatenelementen erhalten wird.

14. Computerimplementiertes Verfahren nach einem der vorhergehenden Ansprüche 8 bis 13, das ferner Folgendes umfasst:
basierend darauf, dass die Leistung des neu trainierten Modells der künstlichen Intelligenz niedriger als oder gleich einem vorbestimmten Standard ist, erneutes Identifizieren eines Einbettungsvektors, der durch das Modell der künstlichen Intelligenz falsch klassifiziert wurde; und
Aktualisieren des Modells der künstlichen Intelligenz durch Erhalten eines synthetischen Einbettungsvektors, der einem Pfad entspricht, der den neu identifizierten, falsch klassifizierten Einbettungsvektor mit einem Einbettungsvektor verbindet, der dem neu identifizierten, falsch klassifizierten Einbettungsvektor in dem Einbettungsraum am nächsten liegt.

15. Übergangsloses, computerlesbares Aufzeichnungsmedium, das ein Programm zum Ausführen eines Steuerungsverfahrens einer elektronischen Vorrichtung enthält, wobei das Steuerungsverfahren Folgendes umfasst:
Erhalten von Trainingsdaten, die eine Vielzahl von Trainingsdatenelementen umfassen, wobei es sich bei den Trainingsdaten um Audiodaten handelt;
basierend auf den Trainingsdaten, Erhalten einer Vielzahl von Einbettungsvektoren, die jeweils auf einen Einbettungsraum für die Vielzahl von Trainingsdatenelementen abbildbar sind;
basierend auf der Vielzahl von Einbettungsvektoren, Trainieren eines Modells der künstlichen Intelligenz, das konfiguriert ist, um die Vielzahl von Trainingsdatenelementen als zu einer Klasse unter einer Vielzahl von Ausgabeklassen gehörend zu klassifizieren, wobei die Vielzahl von Ausgabeklassen mindestens eine menschliche Stimmklasse, eine Musikklangklasse und eine Geräuschklasse umfasst;
Identifizieren eines falsch klassifizierten Einbettungsvektors unter der Vielzahl von Einbettungsvektoren, der durch das Modell der künstlichen Intelligenz falsch klassifiziert wurde;
Identifizieren eines Einbettungsvektors, der dem falsch klassifizierten Einbettungsvektor in dem Einbettungsraum am nächsten liegt;
Erhalten eines synthetischen Einbettungsvektors, der einem Pfad entspricht, der den falsch klassifizierten Einbettungsvektor mit dem Einbettungsvektor verbindet, der dem falsch klassifizierten Einbettungsvektor in dem Einbettungsraum am nächsten liegt; und
erneutes Trainieren des Modells der künstlichen Intelligenz durch Hinzufügen des synthetischen Einbettungsvektors zu den Trainingsdaten.

## Revendications

1. Dispositif électronique comprenant :
une mémoire dans laquelle est stockée au moins une instruction, et
un processeur relié à la mémoire pour commander le dispositif électronique ;
ledit processeur, par l'exécution de ladite au moins une instruction, étant configuré pour :
acquérir des données d'entraînement comprenant une pluralité d'éléments de données d'entraînement, lesdites données d'entraînement étant des données audio,
à partir des données d'entraînement, acquérir une pluralité de vecteurs d'intégration qui peuvent respectivement être mappés sur un espace d'intégration pour la pluralité d'éléments de données d'entraînement,
à partir de la pluralité de vecteurs d'intégration, entraîner un modèle d'intelligence artificielle conçu pour classer la pluralité d'éléments de données d'entraînement comme appartenant à une classe parmi une pluralité de classes de production, ladite pluralité de classes de production comprenant au moins une classe de voix humaine, une classe de son musical et une classe de bruit,
identifier un vecteur d'intégration mal classé par le modèle d'intelligence artificielle parmi la pluralité de vecteurs d'intégration,
identifier un vecteur d'intégration le plus proche du vecteur d'intégration mal classé, dans l'espace d'intégration,
acquérir un vecteur d'intégration synthétique correspondant à un chemin reliant le vecteur d'intégration mal classé au vecteur d'intégration le plus proche du vecteur d'intégration mal classé dans l'espace d'intégration, et
réentraîner le modèle d'intelligence artificielle en ajoutant le vecteur d'intégration synthétique aux données d'entraînement.

2. Dispositif électronique selon la revendication 1, dans lequel, par l'exécution de l'au moins une instruction, le processeur est en outre configuré pour :
acquérir le vecteur d'intégration synthétique situé en un point du chemin dans l'espace d'intégration, par synthétisation du vecteur d'intégration mal classé et du vecteur d'intégration le plus proche dudit vecteur d'intégration mal classé.

3. Dispositif électronique selon l'une quelconque des revendications précédentes, dans lequel le vecteur d'intégration mal classé comprend un vecteur d'intégration dont une classe étiquetée est différente d'une classe prédite par le modèle d'intelligence artificielle après que le vecteur d'intégration a été introduit dans le modèle d'intelligence artificielle.

4. Dispositif électronique selon l'une quelconque des revendications précédentes, dans lequel le vecteur d'intégration le plus proche du vecteur d'intégration mal classé comprend un vecteur d'intégration bien classé par le modèle d'intelligence artificielle.

5. Dispositif électronique selon l'une quelconque des revendications précédentes, dans lequel, par l'exécution de l'au moins une instruction, le processeur est en outre configuré pour :
étiqueter une classe du vecteur d'intégration synthétique comme étant identique à une classe étiquetée du vecteur d'intégration mal classé.

6. Dispositif électronique selon l'une quelconque des revendications précédentes, dans lequel, par l'exécution de l'au moins une instruction, le processeur est en outre configuré pour :
acquérir la pluralité de vecteurs d'intégration par extraction respective de caractéristiques hors de la pluralité d'éléments de données d'entraînement.

7. Dispositif électronique selon l'une quelconque des revendications précédentes, dans lequel, par l'exécution de l'au moins une instruction, le processeur est en outre configuré pour :
si les performances du modèle d'intelligence artificielle réentraîné sont inférieures ou égales à une norme prédéterminée, réidentifier un vecteur d'intégration mal classé par le modèle d'intelligence artificielle,
actualiser le modèle d'intelligence artificielle par acquisition d'un vecteur d'intégration synthétique correspondant à un chemin reliant le vecteur d'intégration mal classé réidentifié à un vecteur d'intégration le plus proche du vecteur d'intégration mal classé réidentifié dans l'espace d'intégration.

8. Procédé mis en œuvre par ordinateur, conçu pour commander un appareil électronique, ledit procédé mis en œuvre par ordinateur comprenant :
l'acquisition de données d'entraînement comprenant une pluralité d'éléments de données d'entraînement, lesdites données d'entraînement étant des données audio,
à partir des données d'entraînement, l'acquisition d'une pluralité de vecteurs d'intégration qui peuvent respectivement être mappés sur un espace d'intégration pour la pluralité d'éléments de données d'entraînement,
à partir de la pluralité de vecteurs d'intégration, l'entraînement d'un modèle d'intelligence artificielle conçu pour classer la pluralité d'éléments de données d'entraînement comme appartenant à une classe parmi une pluralité de classes de production, ladite pluralité de classes de production comprenant au moins une classe de voix humaine, une classe de son musical et une classe de bruit,
l'identification d'un vecteur d'intégration mal classé par le modèle d'intelligence artificielle parmi la pluralité de vecteurs d'intégration,
l'identification d'un vecteur d'intégration le plus proche du vecteur d'intégration mal classé, dans l'espace d'intégration,
l'acquisition d'un vecteur d'intégration synthétique correspondant à un chemin reliant le vecteur d'intégration mal classé au vecteur d'intégration le plus proche du vecteur d'intégration mal classé dans l'espace d'intégration, et
le réentraînement du modèle d'intelligence artificielle par ajout du vecteur d'intégration synthétique aux données d'entraînement.

9. Procédé mis en œuvre par ordinateur selon la revendication 8, dans lequel, lors de l'acquisition du vecteur d'intégration synthétique, le vecteur d'intégration synthétique situé en un point du chemin dans l'espace d'intégration est acquis par synthétisation du vecteur d'intégration mal classé et du vecteur d'intégration le plus proche du vecteur d'intégration mal classé.

10. Procédé mis en œuvre par ordinateur selon l'une quelconque des revendications précédentes 8 et 9, dans lequel le vecteur d'intégration mal classé comprend un vecteur d'intégration dont une classe étiquetée est différente d'une classe prédite par le modèle d'intelligence artificielle après que le vecteur d'intégration a été introduit dans le modèle d'intelligence artificielle.

11. Procédé mis en œuvre par ordinateur selon l'une quelconque des revendications précédentes 8 à 10, dans lequel le vecteur d'intégration le plus proche du vecteur d'intégration mal classé comprend un vecteur d'intégration bien classé par le modèle d'intelligence artificielle.

12. Procédé mis en œuvre par ordinateur selon l'une quelconque des revendications 8 à 11 précédentes, comprenant en outre :
l'étiquetage d'une classe du vecteur d'intégration synthétique comme étant identique à la classe étiquetée du vecteur d'intégration mal classé.

13. Procédé mis en œuvre par ordinateur selon l'une quelconque des revendications précédentes 8 à 12, dans lequel, lors de l'acquisition de la pluralité de vecteurs d'intégration, la pluralité de vecteurs d'intégration est acquise par extraction respective de caractéristiques hors de la pluralité de données d'entraînement.

14. Procédé mis en œuvre par ordinateur selon l'une quelconque des revendications 8 à 13 précédentes, comprenant en outre :
si les performances du modèle d'intelligence artificielle réentraîné sont inférieures ou égales à une norme prédéterminée, la réidentification d'un vecteur d'intégration mal classé par le modèle d'intelligence artificielle, et
l'actualisation du modèle d'intelligence artificielle par acquisition d'un vecteur d'intégration synthétique correspondant à un chemin reliant le vecteur d'intégration mal classé réidentifié à un vecteur d'intégration le plus proche du vecteur d'intégration mal classé réidentifié dans l'espace d'intégration.

15. Support d'enregistrement non transitoire lisible par ordinateur comprenant un programme permettant d'exécuter un procédé de commande d'un dispositif électronique, le procédé de commande comprenant :
l'acquisition de données d'entraînement comprenant une pluralité d'éléments de données d'entraînement, lesdites données d'entraînement étant des données audio,
à partir des données d'entraînement, l'acquisition d'une pluralité de vecteurs d'intégration qui peuvent respectivement être mappés sur un espace d'intégration pour la pluralité d'éléments de données d'entraînement,
à partir de la pluralité de vecteurs d'intégration, l'entraînement d'un modèle d'intelligence artificielle conçu pour classer la pluralité d'éléments de données d'entraînement comme appartenant à une classe parmi une pluralité de classes de production, ladite pluralité de classes de production comprenant au moins une classe de voix humaine, une classe de son musical et une classe de bruit,
l'identification d'un vecteur d'intégration mal classé par le modèle d'intelligence artificielle parmi la pluralité de vecteurs d'intégration,
l'identification d'un vecteur d'intégration le plus proche du vecteur d'intégration mal classé, dans l'espace d'intégration,
l'acquisition d'un vecteur d'intégration synthétique correspondant à un chemin reliant le vecteur d'intégration mal classé au vecteur d'intégration le plus proche du vecteur d'intégration mal classé, dans l'espace d'intégration, et
le réentraînement du modèle d'intelligence artificielle par ajout du vecteur d'intégration synthétique aux données d'entraînement.
